# EUROPEAN PATENT APPLICATION

(11) **EP 1 054 333 A2**
(43) Date of publication of application: **22.11.2000**
(21) Application number: 00109921.7
(22) Date of filing: 10.05.2000
(51) Int. Cl.: G06F 17/60

(54) **Computerized methods for competitive and collaborative contract bidding, formation, and performance**

(30) Priority: 20.05.1999 US 316410
(71) Applicant: Hewlett-Packard Company, Palo Alto, California 94304-1112 (US)
(72) Inventor: Carpenter, Ralph Lionel, Jr., Colfax, California 95713 (US)
(74) Representative: Schoppe, Fritz, Dipl.-Ing.

(57) **Abstract**

Methods for carrying out electronic commerce, using, for example, the Internet, or other electronic means for communicating among servers and computer stations. An exclusive electronic business community is formed in which customer members post requests for proposals for goods or services on an electronic business site. Vendor members review the posted requests and then post a responsive proposal or bid at the electronic business site. The bid may be based either upon the vendor's individual capabilities, or upon capabilities resulting from collaborating with third parties. The collaboration with third parties may range from forming business alliances or partnerships, to assuming primary contractor or sub-contractor roles. The requesting customer member accesses whatever bids are submitted, and ultimately negotiates and enters into a contract with a selected vendor member for purchase of the desired goods or services.

## Description

### BACKGROUND OF THE INVENTION

### 1. Field of the Invention

The invention relates generally to methods for carrying out electronic commerce, using, for example, the Internet, or other electronic means for communicating among servers and computer stations. More specifically, the invention relates to methods for customer members to post requests for goods or services on an electronic business web site, for vendor members to review the posted requests and then post a responsive proposal or bid at the electronic business site. This proposal may be based either upon the vendor's individual capabilities or upon capabilities resulting from collaborating in a variety of ways with third parties. The requesting customer member and a selected vendor member then negotiate and ultimately enter into a contract for purchase of the desired goods or services.

### 2. Description of the Prior Art

Electronic commerce using the Internet has increased significantly in recent years, and promises ultimately to supplant many traditional ways of conducting business. One common form of electronic commerce contemplates that an individual company, or vendor, maintains an Internet web site where that company's goods or services are advertised. In the advertisement of goods, product specifications, pictures, prices, and purchase information are typically included. Services may be advertised in the same fashion, where the services are standard, and the scope of the work is known and definite. However, the advertisement of custom services is more difficult, as it requires interactive sharing of information between the company and its potential customer. Some web sites provide for direct E-mail inquires, where the customer can communicate its needs and specifications to the company, and receive in return an E-mailed bid or proposal from the company, calculated to meet the customer's specified requirements.

While electronic communication by way of the Internet and E-mail enhances certain aspects of the business model described above, the mechanics of the commercial transaction remain traditional and inefficient in many ways. The prior art business model initially requires that a customer lists its requirements and specifications for the desired goods and services. Then, the customer must survey and review, all of the potentially acceptable products and services available in the marketplace. After culling out the inappropriate or undesirable vendors, the customer finally develops a "short list" of suitable targeted vendors.

The customer then creates a document known as a Request For Proposal ("RFP"), and issues a copy of the RFP to the short list of vendors. Upon receipt of the RFP, a targeted vendor may elect not to respond or bid, in effect eliminating prospective vendors from the short list. In addition to shortening the list further, the customer's time and effort expended in selecting and communicating with a non-responsive targeted vendor are entirely wasted.

Some of the targeted vendors which intend to respond to the RFP may be unable to provide all of the required good or services. These vendors must invite assistance from other vendors to fulfill the customer's needs. The existence of collaboration or business partnerships between or among vendors to satisfy the terms of a particular RFP may not be reflected in the proposal made to the customer. The customer may mistakenly believe that a single vendor will perform under the proposal, when in fact, other unknown vendors may be intimately involved both in the development of the proposal and in completion of performance under it.

The customer reviews the proposals, and ultimately decides upon which vendor or vendors it wants to provide the desired goods or services. Then, the customer and the vendor are called upon to negotiate the terms and conditions, including the price, of the goods or services in question. The negotiation situation may further be complicated if the selected vendor did not disclose, in the terms of its proposal, the fact that other vendors, or sub-contractors will be relied upon to perform the requested service or provide the requested goods. Such a situation creates a multi-layered negotiation process, where the selected vendor may have to negotiate with the other vendors or sub-contractors each time a counter-proposal is received from the member customer. The multi-layered negotiation process is time-consuming and inefficient, and ultimately adds to the overall cost of the goods or services, both for the customer and the vendor. The prior art selection process also eliminates potential vendors who may be involved in the process of developing products and services that could satisfy the customer's requirements, but were never even considered because the customer was not aware of the vendor's present or developing capabilities.

Consequently, room exists for improvement in the overall process by which customers and vendors engage in competitive and collaborative contract bidding, formation and performance, for the purchase of goods and services.

### SUMMARY OF THE INVENTION

The present invention contemplates the establishment of an electronic business site preferably on the Internet, or connected to an equivalent electronic communications network. The business site is run by a business community organizer, and is only accessible by business community members, including customer members, vendor members, and sub-contractor members. The members are registered in the business community, after providing certain information to the community organizer and meeting entry criteria.

At the electronic business site, a virtual business community is created where customer members and vendor members can meet to exchange requirements and proposals, access performance histories of members under earlier contracts, and negotiate the terms of a new contract. The electronic business site also facilitates the formation of partnerships and other collaborative business relationships among and between vendors and sub-contractors, to satisfy customer member needs. This is typically accomplished by bringing together types of electronic postings, including: Requests For Proposals, posted by customer members; Proposals/Bids, posted by vendor members; and, templates or forms of Memoranda Of Understanding and Corporate Partnership Contracts, posted by the community organizer. Once a bid for a customer project has been tendered and accepted, and an agreement between the customer member and the vendor member has been entered into, implementation of the project may require special staffing. For that purpose, a vendor may recruit sub-contractors.

A client/server architecture is employed to implement the system. The business site maintained by the community organizer includes hardware in the form of one or more application servers, one or more data storage devices, and a plurality of web servers, and appropriate software to control each component. Each of the community members has a client PC or a workstation, or an interactive web client device, such as a cellular phone, capable of accessing the Internet or the communication network system employed. Vendor members may be directly connected either to the Internet, or a collaboration server may be interposed between the vendor's web client device and the Internet. This special server arrangement allows vendors to collaborate among themselves to fashion and implement joint business relationships in response to customers' requirements.

Customer members initiate a business transaction by posting a Request For Proposal ("RFP") on the web page of the business site. The RFP typically has a detailed description of the goods or services sought, the desired date for performance completion, and a budget, if applicable. Vendor members become aware of posted RFPs in several ways. A vendor member may browse outstanding RFPs posted on the web page. Or, a vendor member may browse the web page searching for a customer member by name, or by searching a company category directory. A notification service is also provided by the community organizer, for sending electronic notification to vendor members, for example by E-mail, whenever an RFP fitting the vendor's criteria is posted.

After a vendor has reviewed an RFP and found it of interest, it needs to make an election as to the desired participatory role in the business transaction. The roles include: a sole vendor role, a primary contractor role, a sub-contractor role, or a vendor/vendor collaborative role. In the event a sole vendor's role is elected, the vendor would simply submit a responsive bid or proposal directly to the customer. The posted RFP is then be updated, to reflect the fact to the customer and to other prospective bidding vendors, that a proposal has been submitted in response to the RFP.

Should a vendor choose to become a primary contractor, it would first seek out sub-contractors through a process known as "marshalling". In this process, the primary contractor may accesses a sub-contractor list, or register, maintained by the community organizer. The primary contractor may also access another register at the business site, containing the names of all vendors who have expressed an interest in assuming a sub-contractor's role for the particular RFP of concern. The community organizer also maintains another member-accessible database, having contract performance history about customers and vendors, including those vendors who may have performed as sub-contractors. Using these tools, the primary contractor selects the appropriate sub-contractor(s), and begins contract negotiations for the necessary goods or services. The parties may access and employ primary/sub-contractor template agreements, maintained by the community organizer. These agreements include typical provisions which are calculated for structuring successful primary/sub-contractor transactions. Assuming successful negotiations are completed, the primary contractor and the sub-contractor(s) enter into a contract, typically made contingent upon the primary contractor being awarded a contract under the RFP. With this complement of additional support, the primary contractor then submits a responsive bid or proposal to the RFP.

A vendor may also choose to form a strategic business alliance, such as a joint venture or some other form of business relationship, with another vendor. In this collaborative circumstance, two or more vendors join together to respond to the RFP. The vendors employ a special set of communication tools and protocols available at the business site, for posting requests for other vendors to enter into a joint business alliance for the purpose of meeting the RFP's requirements. The vendors have access to the previously mentioned database having contract performance information about potential vendor partners. The vendors also have access to vendor/vendor template agreements, maintained at the business site by the community organizer. Contract negotiations between and among the vendors ensue, and if successful, result in vendor/vendor contracts. Then, the vendor business alliance posts a vendor/vendor bid to the customer in response to the RFP.

Further negotiations ensue after the requesting customer member receives the responsive bids, and selects a posting vendor, or vendors, with whom to enter into a contract. The customer and vendor members may choose to employ one or more contract templates provided at the business site. These contract templates are created by the community organizer and the members to handle a wide variety of goods and service transactions, and are subject to ongoing revisions by the members based upon shared experiences. Other means of facilitating member communications and knowledge include bulletin boards, forums, and real time electronic meetings.

After a contract is successfully negotiated and formed, this fact is posted at the business site. As contract performance progresses and is completed, this information may also be posted. Specific information about the contract terms may be secured for access only by the contracting members. In the event that performance under the contract template raises issues which could be addressed by appropriate modifications, interested members may participate in procedures for template amendments.

These and other features of the invention herein will be described in further detail in the drawings and the detailed description of the preferred embodiment to follow.

### BRIEF DESCRIPTION OF THE DRAWINGS

Figure 1 is a pictorial diagram of the components of the electronic business site interconnected to the members by means of the Internet;
Figure 2 is a flow chart showing the process for member registration; and,
Figures 3A and 3B together constitute a flow chart showing the general process for commercial transactions conducted on the electronic business site.

### DETAILED DESCRIPTION OF THE PREFERRED EMBODIMENT

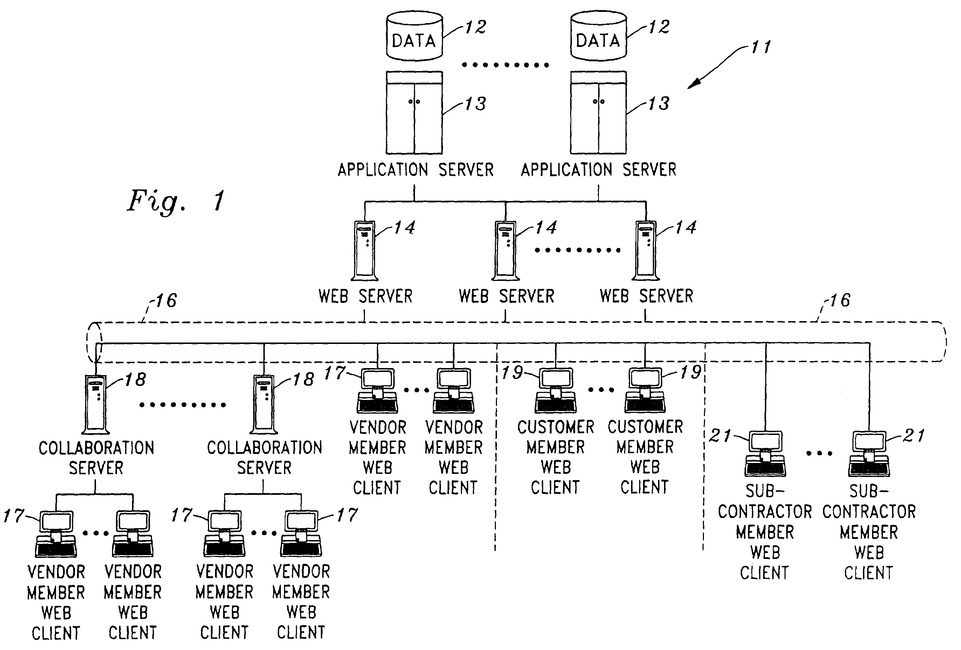

Turning now to Figure 1, the electronic business site 11 includes at least one data storage device 12 and at least one application server 13. Servers 13 are selected from a suitable commercial system, capable of providing high performance database services at scalable transaction rates. A number of commercially available web servers 14 are also provided. Web servers 14 are capable of providing high performance web services at transaction rates which can be scaled to member population. Servers 14 must also be capable of configuring many heterogeneous servers having the same name-server identity.

The network of web servers 14 intermediates between the web browser client, running JAVA or ACTIVEX, and the network of application servers 13, running three-tiered application server software. The web servers 14 are running commercially available software, whereas the three-tiered application server software has some custom features. These features include: client software, written in JAVA, JAVA SCRIPT, and/or ACTIVEX; servlets, written in server-side JAVA or a similar language; CORBA server components, and COM server components.

The web servers 14 are all connected to the Internet 16, or another equivalent electronic communication network. Each vendor member has a web client device 17, such as a PC, which may be connected directly to the Internet 16, or indirectly via a collaboration server 18. The application software for the server 18 provides a "bolt-on" web client module as well as a distributed collaboration meeting facility. This latter feature supports vendor member communication and interaction such as same time collaboration, near time collaboration with persistent meeting notes and time-stamped discussion threads, graphics, white board, text chat/sideboard, and project schedule.

Similarly, each customer member has a web client device 19, and each vendor/sub-contractor member has a client web client device 21, all of which are connected either directly or by a proxy server, to the Internet 16. Software used in devices 19 and 21 includes a web browser or an equivalent Internet interface.

The community organizer establishes and maintains the electronic business site 11 in exchange for revenue paid by the community members. Sources of potential revenue for this service include subscription fees, content delivery fees, service fees, advertising, and transaction fees. Subscription fees are levied monthly to members, for their participation in the community. Usage fees may take the form of hourly charges for usage of the business site 11, charges for "pages" of the site accessed, or a combination of the two. Content delivery charges are charges for downloading specific information, such as contract templates and directories. Service fees are charges for specialized services, such as electronic notifications for postings for goods or services of a particular type. Advertising fees are charges for either banner advertisements that appear on viewed "pages" of the site, or for "click throughs" to the advertiser's own web site. The transaction fees are commissions charged to members for transactional exchanges undertaken by community members.

The customer members principally join the community to improve the efficiency and effectiveness of their business operations, in securing outside sources of goods and services. In the present instance, customer members seeking vendors to bid for the opportunity to fulfill their needs will find an entire community of vendors available to them. Instead of undertaking the prior art process of first finding and then selecting a group of vendors to whom to submit a Request For Proposal, the customer member using the electronic business site merely posts its requirements to the virtual business community. The customer member will also have the benefit of access to the "track record" of each potential vendor, in performing past transactions with other members. These stored performance testimonials are useful to the customer member, in making a final selection between two vendors, particularly where all other aspects of their respective bids are close. Lastly, the customer members will have the capability of contacting directly other customer members of the bidding vendors, should an additional investigation be warranted.

Vendor members benefit from ready access to a community of customer members, willing to post their requirements for goods and services. The vendor members also have access to a collection of other vendors who may desire to form a joint venture, or another form of business relationship, to satisfy a customer's requirements. The vendor members will also benefit from access to certain templates, or forms, which facilitate contract formation with other vendors and with customer members.

Vendor/sub-contractor members benefit from access to customer member postings and vendor postings, relating to customer projects and requirements. By viewing these postings, vendor/sub-contractors are able to assess whether they have the interest and capability in undertaking a portion of a particular project, under the bid of a vendor member. Sub-contractor members also have access to the portfolio of templates for employment agreements, provided by the community organizer.

As will be explained herein, a vendor may assume either a sole vendor role, a joint vendor role, or a sub-contractor role. It should be understood, therefore, that the vendor/sub-contractor role is merely a subset of the larger vendor role, and a particular vendor may elect to play different roles in different projects, depending upon interests and capabilities to perform.

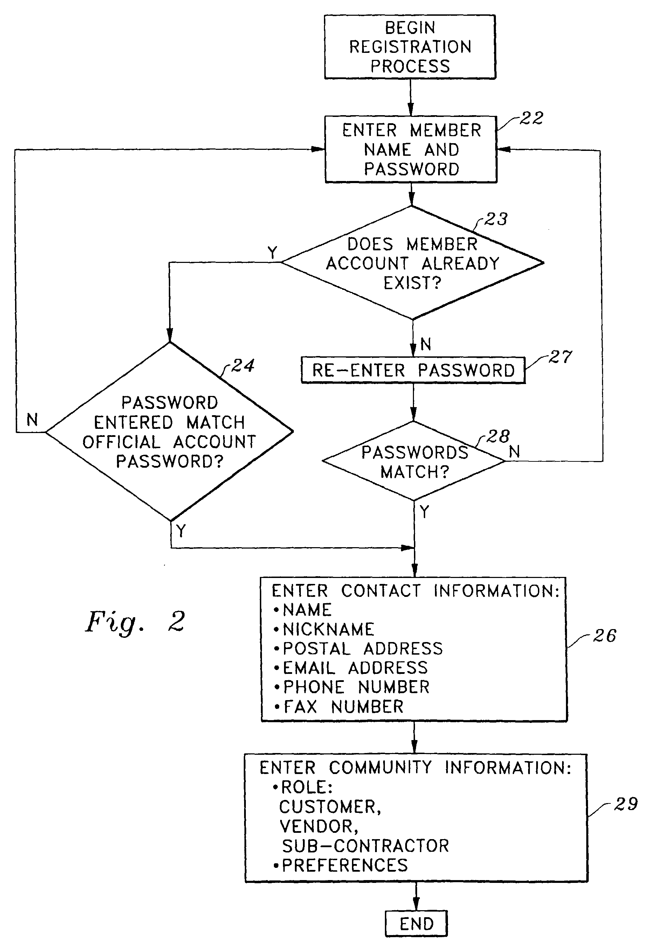

The virtual business community is established, maintained, and expanded through a registration process. Figure 2 shows generally how such a process is undertaken. As will be explained below, each community member has somewhat different concerns depending upon their role in the community, and this is reflected in the particular information entered by and collected from each member during the registration process. To begin the registration process, the existing member or the applicant member accesses the electronic business site on the Internet, and enters a name and a password as well, in step 22. A determination is made in step 23, whether a member account already exists. If so, step 24 compares the password entered with the official account password. If they do not match, the process returns to step 22. If they do match, the contact information step 26 is reached. Returning briefly to step 23, if the member account does not exist, the process passes to step 27, where the password is re-entered. If the passwords now match in step 28, the process will proceed to step 26. If not, the process returns again to step 22. For a new account, a member may not enter into contract negotiations until the community organizer has validated account information.

Basic contact information about the member, such as name, nickname, postal address, E-mail address, phone number, and facsimile number are entered into in step 26. Community information about each member, depending upon their role in the community, is provided in step 29. Access to certain types of community member information is restricted by the community organizer. Customer members are initially asked to provide billing information, corporate affiliation, and preferences. Vendor member information to be provided may include product or service category or categories, corporate affiliation and business entity, billing information, and preferences. The community organizer conducts a screening process of new registrants, to ensure that all members' interests are protected. After step 29 is completed, the registration process ends.

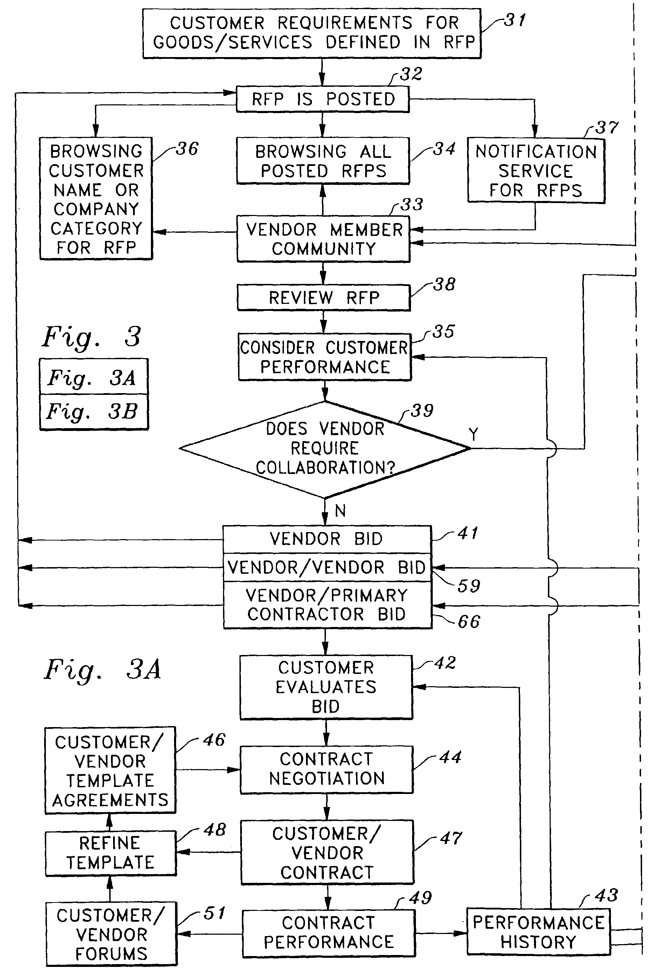

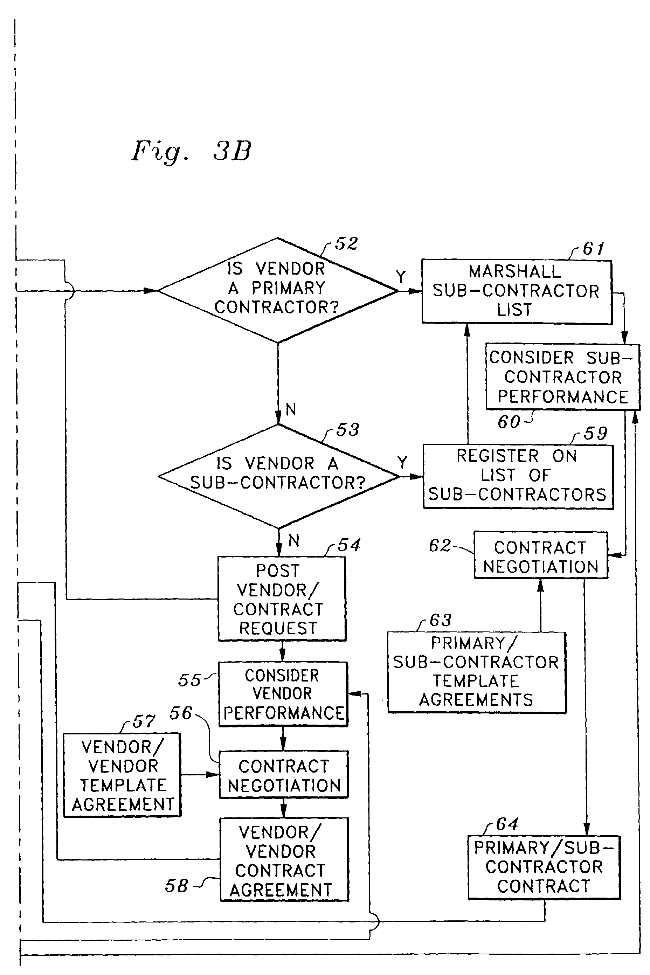

The overall process for transactions carried on at the electronic business site 11 is shown in Figure 3. To initiate a transaction in step 31, a requesting customer member having a validated account, first defines in a written Request For Proposal ("RFP"), its requirements for goods or services. Some RFPs, of course, may set forth a combination of both goods and services. From a strictly legal standpoint, the RFP will usually constitute an invitation for an offer, rather than an offer itself However, it is possible that an RFP may be written as an offer, having sufficient detail and specificity to form a contract upon immediate acceptance of all terms and conditions by a willing vendor. Typically though, the RFP will be more general than a formal contract offer, and will set forth the project description, the category or categories of goods and services, the functional specifications for the goods and services, the time for performance, and perhaps a range for the desired contract price, or a rough scale of the available budget. The E-mail address of the person to receive responsive bids is also set forth. In all cases, the RFP must be sufficiently clear and concise so as to promote both automatic and manual filtering, by browsing, as to its contents, after it is posted.

In step 32, the RFP is posted at the electronic business site. The vendor member community 33 can become appraised of the RFP in a variety of ways. First, vendor members can browse all posted RFPs, as indicted by step 34. Although this method gives vendors a wide range of projects to consider, it may not be particularly time-effective if the list of available RFPs is lengthy. Another alternative is identified in step 36, namely, browsing customer names or company categories for RFPs. Vendor members may already know most of the names of potential customers of interest, so this method may prove more effective in locating RFPs within a known field of businesses. Step 36 also contemplates category browsing, for companies within a known company category which have posted RFPs. Lastly, the community organizer provides a notification service for RFPs, designated by step 37. With this service, all RFPs falling within a selected category, such as price, subject matter, geographic area for performance, time for performance, and the like, are immediately routed after posting to the subscribing vendor member.

Once a vendor member has become aware of an RFP, it first reviews the RFP in step 38 to see if it is of interest. If it is, then in step 35, the vendor may consider that requesting customer's past performance. In a member-accessible database or other electronic record maintained by the community organizer, customer and vendor performance history 43 is stored. This history sets forth salient facts, regarding each members' participation in undertaking and completing past contracts. Another important consideration for the vendor, is deciding what role the vendor would like to assume in satisfaction of the customer's stated requirements. For example, in step 39, the vendor must decide whether or not it requires collaboration with others to satisfy the requirements of the RFP. If the vendor decides that it solely will perform all contractual obligations sought under the RFP, the vendor will directly submit a vendor bid or proposal, in step 41. At the moment the posting vendor makes the bid, the RFP posting includes a notification of that fact and the bid itself is sent directly to the customer member. In step 42, the requesting customer evaluates the bid or proposal, taking into consideration the terms of the bid, and the performance history 43 for the posting vendor, if it is available. If the bid is one that appears worth pursuing further, the requesting customer communicates that fact to the posting vendor, and the contract negotiation, step 44, begins.

In formulating the terms of the contract, the customer and the vendor may rely upon the customer/vendor template agreements 46, maintained in a database or other electronic record at the electronic business site. Then during the course of contract negotiations, these templates may be amended to incorporate, modify, or flag terms dealing with issues which have arisen. In the event the negotiations result in an agreement, a customer/vendor contract 47 is entered into. Step 48, presents another opportunity to refine the templates by adding the new contract to the existing template agreements, or by amending certain provisions of the existing template agreements in accordance with the fully negotiated terms.

As a final step 49, contract performance is completed under the terms of the existing customer/vendor contract. It may be that as a result of the contract performance, postings may be made, or real-time electronic meetings may be undertaken, by one or more members by way of customer/vendor forums 51. There may be customer only forums, vendor only forums, or combined customer and vendor forums. Performance under a recently completed contract may be discussed, or any other topic of concern to the members of the business community may be entertained. These discussion at the forums may also result in further refinements to the template agreements, as indicted in Figure 3A.

In the event that the vendor requires collaboration with others to fulfill or otherwise participate in providing goods or services in response to an RFP, other systems are in place in the electronic business site to facilitate decision-making and issue resolution. Making reference now to Figure 3B, the vendor must decide in step 52, whether its is to be a primary contractor or not. For purposes of the present discussion, a primary contractor is one who will collaborate with one or more sub-contractors, to fulfill the requirements of the RFP. Assuming first that the vendor does not wish to be a primary contractor, it must then decide in step 53, whether or not it wants to assume a sub-contractor role.

If the vendor elects not to be a sub-contractor, then the remaining role is that of entering into a partnership, or some other type of business relationship, with one or more other vendors. For example, if the vendor desires a partner to assist in fulfilling the requirements of the RFP, the vendor may post a partner request 54, directed either to the vendor member community 33 at large, or to a selected segment of that community. The partner request would typically make reference to a particular RFP, and set forth what goods or services the requesting partner would provide, and what goods or services the sought after partner would provide.

The potential vendor/partner may consider the requesting vendor/partner's past performance 55, by accessing the performance history 43 stored at the business site. Similarly, the requesting vendor/partner may consider the potential vendor/partner's past performance 55, after receiving an initial response to the request.

If a satisfactory initial response is received from another vendor, parties may begin contract negotiations, in step 56. The parties may also rely upon the vendor/vendor template agreements 57 in establishing a starting point in their contract negotiations.

It should be pointed out that the negotiated "contract" between the vendors could be a joint venture, a partnership, or even a merger of the two business entities. It simply depends upon the nature, size, and temporal scope of the RFP and the objectives of the vendors as to what form of business relationship is appropriate. Thus, while the particular example herein refers to a partnership, this relationship is only one of many that may be selected, developed, and agreed to between and among two or more vendor members.

If the negotiations are successful, the vendors will then enter into a vendor/vendor contract agreement, in step 58. It is reasonable to assume that in most instances, the agreement will be contingent upon successful bidding for a particular RFP. However, the nature of the electronic business site is such that longer term alliances and other business relationships may result from an initial collaborative effort between two or more vendors. Based upon their contractual agreement, the vendors must still formulate a vendor/vendor bid or proposal, in step 58. Taking into consideration their contractual agreement, the posting vendors will submit their bid to the customer member in the same manner as the individual posting vendor did, in the example previously described. The vendor/vendor bid will undergo an evaluation process by the customer, and if successful in bidding, the contract negotiation, contract formation, and vendor performance processes are identical to those previously explained in Figure 3A. For that reason, no effort will be made herein to provide a duplicate explanation of those steps already described.

Returning now to step 53, if the vendor elects to be a sub-contractor, the vendor will register itself on a list of sub-contractors 59. This list will typically make reference to a particular RFP, and will also set forth the particular goods and services which the vendor is capable of providing, in this role as a sub-contractor. The community organizer may also maintain a general list of sub-contractors, which contains the names of all members who are interested in performing as a sub-contractor without reference to particular project requirements. These lists are available to other vendors, and are particularly designed for access by vendors desiring to be a primary contractor, in fulfilling a particular RFP.

Thus, in step 52, if the vendor seeks the role of a primary contractor, it does so with the knowledge that one or more sub-contractors must be solicited or ascertained, for providing goods or services that the primary contractor itself cannot provide. In step 61, the primary contractor undertakes a process known as marshalling the sub-contractor list. In reviewing this list, the primary contractor assesses the capabilities, experience, and skills of a listing sub-contractor, and decides which one or ones of them are good prospects. The primary contractor may also consider past sub-contractor performance 60, by accessing the database containing performance history 43. Then, in step 62, the process of contract negotiation between and among the vendor/primary contractor and one or more vendor/sub-contractors is undertaken. As with the other contract negotiation and formulation processes described, the parties may rely upon primary/sub-contractor template agreements 63. These agreements are maintained and refined in the same way as the other templates.

If the parties have successfully negotiated the terms and conditions of their business relationship, a primary/sub-contractor contract 64 is entered into. Because this relationship is usually formulated around a particular RFP, the contract 64 is typically contingent upon the primary contractor's award of a prime contract with the customer who posted that RFP. To that end, the primary contractor submits a posting vendor/primary contractor bid or proposal in step 66 (see, Figure 3A). Of course, only the posting vendor/primary contractor submits the bid, as the sub-contractors tights and obligations to perform the requirements of the RFP are only under the primary contractor, by virtue of the primary/sub-contractor contract 64. After the posting vendor/primary contractor's bid has been submitted to the requesting customer member, this bid is treated in identical fashion to the posting vendor bid and the posting vendor/vendor bid described above.

It will be appreciated, then, that I have described an electronic business site established and maintained by a community organizer. Customers and vendors register as exclusive members of the business site, and use its unique and efficient methods of posting Requests For Proposals, formulating partnerships, formulating primary and sub-contractor relationships, submitting bids, negotiating and entering into contracts, and performing under those contracts.

## Claims

1. A computerized method for members to conduct business at a member-only accessible electronic business site, comprising the steps of:
a. registering a community of customer members, at least one of said customer members being a requesting customer, posting a request for proposal for goods or services at the electronic business site;
b. registering a community of vendor members, at least one of said vendor members being a posting vendor, accessing and reviewing said request for proposal;
c. providing a performance history database at the electronic business site, said database containing past contract performance history for said customer members and said vendor members, said database being accessible by customer members and vendor members;
d. said posting vendor posting a bid in response to said request for proposal, providing said posting vendor member finds said request for proposal of interest;
e. said requesting customer evaluating said bid, and entering into contract negotiations with said posting vendor, providing said requesting customer member finds said bid of sufficient interest for negotiation; and,
f. entering into a customer/vendor contract, providing said requesting customer and said posting vendor agree upon terms of a customer/vendor contract.

2. The method of claim 1 further including the steps of collecting information regarding customer and vendor performance under said customer/vendor contract, and entering said information into said performance history database.

3. The method of claim 1 further including the step of providing a customer/vendor template agreement database containing at least one agreement for the sale of goods or services between a customer and one or more vendors, said customer/vendor template database being accessible by said customer members and said vendor members.

4. The method of claim 3 further including the step of facilitating customer/vendor forums, during which performance under customer/vendor contracts is discussed by way of bulletin board postings and electronic meetings through the electronic business site.

5. The method of claim 4 further including the step of refining said template database in view of discussions had during the course of said customer/vendor forums.

6. The method of claim 1 further including the step of said posting vendor member making a determination after reviewing said request for proposal, that said posting vendor requires collaboration with other vendor members to provide said goods or services required under said request for proposal.

7. The method of claim 6 further including the steps of said posting vendor member electing to become a primary contractor and reviewing a sub-contractor list maintained at the electronic business site for marshalling one or more sub-contractors to assist said primary contractor in providing said goods or services.

8. The method of claim 7 further including the steps of said primary contractor accessing said performance history database, and considering the performance of sub-contractors which have been marshalled.

9. The method of claim 8, further including the steps of said primary contractor and said marshalled sub-contractor undertaking contract negotiations and entering into a primary/sub-contractor contract.

10. The method of claim 9, further including the step of providing a primary/sub-contractor template agreement database containing at least one agreement for the sale of goods or services between a primary contractor and one or more sub-contractors, said primary/sub-contractor template database being accessible by primary contractors and sub-contractors.

11. The method of claim 6 further including the steps of said posting vendor member electing to become a sub-contractor and registering on a sub-contractor list maintained at the electronic business site.

12. The method of claim 6 further including the steps of said posting vendor member electing to enter into a joint business relationship with another vendor to assist said accessing vendor member in providing said goods or services, and posting a vendor/contract request at the electronic business site to the vendor member community.

13. The method of claim 12 further including the steps of said posting vendor accessing said performance history database, and considering the performance of any vendor which has responded to said vendor/contract request.

14. The method of claim 13, further including the steps of said posting vendor and said responding vendor undertaking contract negotiations and entering into a vendor/vendor contract.

15. The method of claim 14, further including the step of providing a vendor/vendor template agreement database containing at least one agreement structuring the joint providence of goods or services by two or more vendors for a customer, said vendor/vendor template agreement database being accessible by vendor members.

16. A computerized method of conducting business at an electronic business site on a network accessible only by members of a registered business community including customer members and vendor members, comprising the steps of:
a. receiving and storing a request for proposal from a requesting customer member;
b. posting said request for a proposal at the electronic business site, for access and review by the vendor members;
c. receiving and storing a bid from a posting vendor member, said bid being responsive to said request for proposal;
d. posting said bid at the electronic business site, for access and review by said requesting customer member;
e. maintaining a performance history database at the electronic business site, said database containing past contract performance history for said customer members and said vendor members, said performance history database being accessible by customer members and vendor members;
f. maintaining a customer/vendor template agreement database containing at least one agreement for the sale of goods or services between a member customer and one or more member vendors, said customer/vendor template database being accessible by said customer members and said vendor members;
g. accessing said performance history database and considering performance of the posting vendor member and considering performance of the requesting customer member; and,
h. accessing said customer/vendor template agreement database and entering into contract negotiations between said requesting customer member and said posting vendor member using an agreement accessed.

17. The method of claim 16 further including the step of said posting vendor making a determination after reviewing said request for proposal, that said posting vendor requires collaboration with other vendor members to provide said goods or services required under said request for proposal.

18. The method of claim 17 further including the steps of said posting vendor member electing to become a primary contractor and reviewing a sub-contractor list maintained at the electronic business site for marshalling one or more sub-contractors to assist said primary contractor in providing said goods or services.

19. The method of claim 17 further including the steps of said posting vendor member electing to become a sub-contractor and registering on a sub-contractor list maintained at the electronic business site.

20. The method of claim 17 further including the steps of said posting vendor member electing to enter into a joint business relationship with another vendor to assist said accessing vendor member in providing said goods or services, and posting a vendor/contract request at the electronic business site to the vendor member community.
